# EUROPEAN PATENT APPLICATION

(11) **EP 4 800 652 A1**
(43) Date of publication of application: **02.09.2026**
(21) Application number: 25305278.1
(22) Date of filing: 28.02.2025
(51) Int. Cl.: G06T 11/00

(54) **DEFORMATION OF MEDICAL IMAGES**

(71) Applicant: Dassault Systèmes, 78140 Vélizy-Villacoublay (FR)
(72) Inventor: GOLDENBERG, Louis, Vélizy-Villacoublay (FR)
(74) Representative: Bandpay & Greuter

(57) **Abstract**

The disclosure notably relates to a computer-implemented method for generating a template image of an organ. The method comprises obtaining a dataset comprising a set of medical images, and an autoencoder pre-trained on a set of medical images. The method comprises determining the template image, by minimizing in the latent space a loss which is a function of the latent vector and, for each medical image of the dataset, parameters of a diffeomorphic deformation applied to the template image to obtain the medical image. The loss includes a first term penalizing a discrepancy between a posterior probability of the parameters of the diffeomorphic deformation, given the medical image, and a Gaussian prior probability of the parameters of the diffeomorphic deformation. The loss includes a second term penalizing a negative log-likelihood of the set of medical images of the dataset, given the latent vector and the parameters of the diffeomorphic deformation.

## Description

### TECHNICAL FIELD

The disclosure relates to the field of computer programs and systems, and more specifically to methods, data structures, computer readable storage mediums, and systems related to generating a template image of an organ.

### BACKGROUND

Several widely used medical-imaging techniques and scanning technologies, such as Computed Tomography Scan (CT-scan), Magnetic Resonance Imaging (MRI) and Positron Emission Tomography (PET), provide acquisitions of medical images representing an anatomical target (e.g., an organ) of a patient.

The use of medical images to visualize an anatomical target of a patient is nowadays common in the medical practice, e.g., to be of assistance for diseases diagnosis and treatment. The use of medical images allows to observe certain types of structures on the anatomical target of the patient and/or capture different pieces of medical information relevant in the medical practice.

However, in the context of medical-imaging analysis, medical images of an anatomical target can vary significantly among patients. Such variability is due to differences among patients, such as anatomy, age, sex, or disease state.

Within this context, there is still a need for an improved solution for processing medical images representing patient organs.

### SUMMARY

It is therefore provided a computer-implemented method for generating a template image of an organ, and hereinafter referred to as the "generating method". The generating method comprises obtaining a dataset comprising a set of medical images representing the organ for different patients, and an autoencoder having been trained on a set of medical images representing the organ for different patients, the autoencoder including an encoder and a decoder. The generating method comprises determining the template image as a result of applying the decoder to a latent vector, the latent vector being defined in a latent space, by minimizing a loss which is a function of the latent vector and, for each medical image of the dataset, parameters of a diffeomorphic deformation applied to the template image to obtain the medical image. The latent vector and the parameters of the diffeomorphic deformation are variable during the minimization. The minimization is performed in the latent space. The loss includes a first term penalizing a discrepancy between a posterior probability of the parameters of the diffeomorphic deformation applied to the template image to obtain each medical image of the dataset, given the respective medical image, and a Gaussian prior probability of the parameters of the diffeomorphic deformation applied to the template image to obtain each medical image of the dataset. The loss includes a second term penalizing a negative log-likelihood of the set of medical images of the dataset, given the latent vector and the parameters of the diffeomorphic deformation applied to the template image to obtain each medical image of the dataset.

The generating method may comprise one or more of the following features:
- the determining of the template image includes training a neural network that predicts the parameters of the diffeomorphic deformation applied to the template image to obtain each medical image of the dataset;
- the neural network takes as input, for each medical image, the latent vector and a result of applying the encoder to the medical image;
- the first term is a Kullback-Leibler divergence between the posterior probability and the Gaussian prior probability;
- wherein the diffeomorphic deformation is a result of an exponentiation of a smooth stationary velocity field, the smooth stationary velocity field being obtained by computing a smoothing kernel at control points of a medical image, each control point being attached with a respective parameter of the diffeomorphic deformation applied to the medical image, the exponentiation of the smooth stationary velocity field comprising a scaling-and-squaring algorithm;
- the smoothing kernel is a Gaussian kernel;
- the Gaussian prior probability is centered;
- the obtaining of the autoencoder comprises training the autoencoder; and/or
- the set of medical images comprises images from any one of the following medical-imaging modalities: Autorefraction, Angioscopy, Bone Densitometry (US), Biomagnetic Imaging, Bone Densitometry (X-Ray), Color Flow Doppler, Cinefluoroscopy, Colposcopy, Computed Radiography, Cystoscopy, Computed Tomography, Duplex Doppler, Digital Fluoroscopy, Diaphanography, Digital Microscopy, Digital Subtraction Angiography, Digital Radiography, Echocardiography, Electrocardiography, Cardiac Electrophysiology, Endoscopy, Fluorescein angiography, Fiducials, Fundoscopy, General Microscopy, Hard Copy, Hemodynamic Waveform, Intra-Oral Radiography, Intraocular Lens Data, Intravascular Optical Coherence Tomography, Intravascular Ultrasound, Keratometry, Lensometry, Laparoscopy, Laser Surface Scan, Magnetic Resonance Angiography, Mammography, Magnetic Resonance, MR T1 weighted, MR T2 weighted, MR Proton density weighted, MR Steady-state-free precession, MR Effective T2, MR Susceptibility-weighted, MR Short-tau inversion recovery, MR Fluid-attenuated inversion recovery, MR Double inversion recovery, MR Conventional diffusion weighted, MR Apparent diffusion coefficient, MR Diffusion tensor, MR Dynamic susceptibility contrast, MR Arterial spin contrast, MR Dynamic contrast enhanced, MR Blood-oxygen-level dependent imaging, MR Time-of-flight, MR Phase contrast, Magnetic Resonance Spectroscopy, Nuclear Medicine, Ophthalmic Axial Measurements, Optical Coherence Tomography (non-Ophthalmic), Ophthalmic Photography, Ophthalmic Mapping, Ophthalmic Refraction, Ophthalmic Tomography, Ophthalmic Visual Field, Optical Surface Scan, Other, Positron Emission Tomography (PET), Panoramic X-Ray, Respiratory Waveform, Radio Fluoroscopy, Radiographic Imaging (conventional film/screen), Radiotherapy Dose, Radiotherapy Image, Radiotherapy Plan, Radiotherapy Treatment Record, Radiotherapy Structure Set, Segmentation, Slide Microscopy, Stereometric Relationship, Single-Photon Emission Computed Tomography (SPECT), Automated Slide Stainer, Thermography, Ultrasound, A-mode US, B-mode US, M-mode US, Visual Acuity, Videofluorography, X-Ray Angiography, and External-Camera Photography.

It is further provided a computer-implemented method of use of a template image of an organ generated according to the generating method. The method of use comprises obtaining an input medical image representing the organ for a patient. The method of use comprises determining parameters of a diffeomorphism which, when applied to the template image, results into the input medical image.

The method of use may comprise one or more of the following features:
- the diffeomorphism is of the same class as the diffeomorphic deformation of the generating method, optionally with parameters predicted by the neural network as discussed herein above; and/or
- the template image comprises data representing a medical segmentation of the template image and/or one or more medical annotations on the template image, the method further comprising projecting the data on the input medical image based on the determined parameters of the diffeomorphism.

It is further provided a data structure including a computer program comprising (i) instructions which, when the program is executed by a computer, cause the computer to perform the generating method and/or (ii) instructions which, when the program is executed by a computer, cause the computer to perform the method of use of a template image of an organ, and/or (iii) a template image generated according to the generating method.

It is further provided a computer readable storage medium having recorded thereon the data structure.

It is further provided a system comprising a processor coupled to a memory, the memory having recorded thereon the data structure.

### BRIEF DESCRIPTION OF THE DRAWINGS

Non-limiting examples will now be described in reference to the accompanying drawings, where:
- FIG. 1 shows a flowchart of an example of the method for generating a template image of an organ;
- FIG. 2 shows a flowchart of an example of the method of use of a template image of an organ generated according to the method for generating a template image of an organ;
- FIG. 3 shows an example of the system; and
- FIG.s 4 to 10 illustrate the methods.

### DETAILED DESCRIPTION

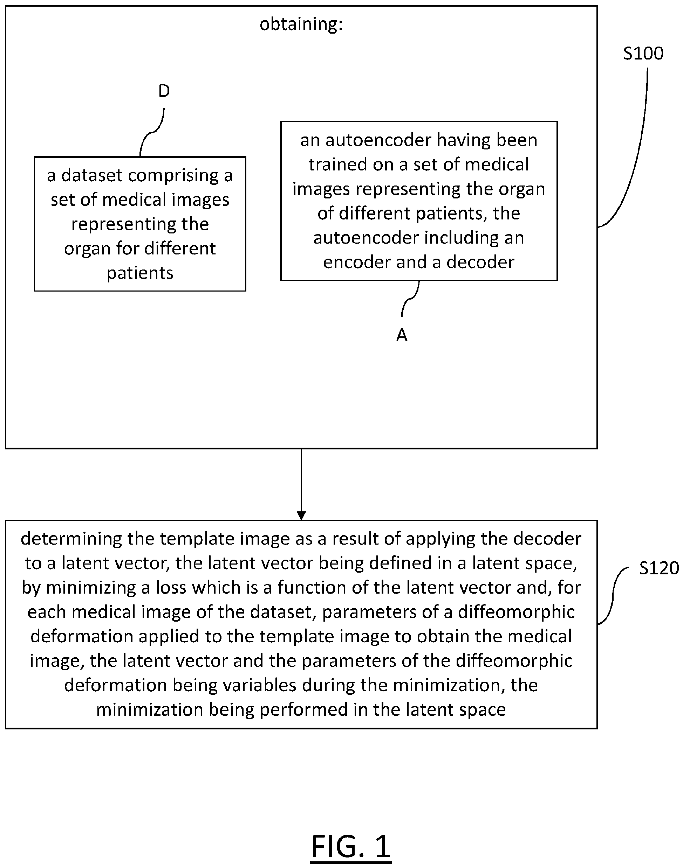

With reference to the flowchart of FIG. 1, it is proposed a computer-implemented method for generating a template image of an organ (e.g., an organ of human beings, such as a heart, a liver, a brain, or lungs), and hereafter referred to as the "generating method".

The generating method comprises obtaining S100 a dataset D. The dataset comprises a set of medical images (e.g., real medical images obtained from a same medical-imaging modality, such as CT-scan or MRI or PET) representing the (same) organ for different patients.

The generating method comprises obtaining S100 an autoencoder A (e.g., a variational autoencoder) having been trained on a set of medical images (e.g., real medical images obtained from a same medical-imaging modality, such as CT-scan or MRI or PET, e.g., the same medical-imaging modality as for the set of medical images of the dataset obtained in S100) representing the organ (still the same organ) for different patients. The autoencoder may optionally have been trained on the (same) dataset obtained in S100. The autoencoder includes an encoder and a decoder. The generating method may optionally comprise the training of the autoencoder. Alternatively, the autoencoder may have been trained separately, such that it is predetermined when performing the generating method.

The generating method comprises determining S120 the template image as a result of applying the decoder to a latent vector, by minimizing a loss. The latent vector is defined in a latent space (i.e., its definition domain). The loss is a function of (i) the latent vector and, for each medical image of the dataset, (ii) parameters of a diffeomorphic deformation applied to the template image to obtain the medical image. The latent vector and the parameters of the diffeomorphic deformation are variable (i.e., they can and do vary) during the minimization, meaning that their value can vary (and does vary) as the minimization is performed. In addition, the latent vector is a variable that is directly explored during the minimization. In other words, the minimization is performed in the latent space (i.e., the latent space is directly explored -or spanned- during the minimization of the loss to attain an optimum latent vector).

The loss includes a first term and a second term. Each term corresponds to a respective penalty. The loss may combine the two penalty terms in any manner, e.g., be the sum of the first term and second term.

The first term penalizes (e.g., minimizes) a discrepancy between a posterior probability and a Gaussian prior probability. The posterior probability represents the probability of the parameters of the diffeomorphic deformation applied to the template image to obtain each medical image of the dataset, given (i.e., conditioned by) the respective medical image. The Gaussian prior probability represents the probability of the parameters of the diffeomorphic deformation applied to the template image to obtain each medical image of the dataset.

The second term penalizes (e.g., minimizes) a negative log-likelihood of the set of medical images of the dataset, given (i.e., conditioned by) the latent vector and the parameters of the diffeomorphic deformation applied to the template image to obtain each medical image of the dataset.

Such a generating method forms an improved solution for processing medical images representing patient organs.

Notably, such a generating method determines a template image of an organ, given a set of medical images representing the organ for different patients. The template image determined at S120 is in particular a representative image or reference image of the set of medical images of the dataset. Each medical image of the dataset D may indeed be obtained by a diffeomorphic deformation applied to the template image. The distribution of diffeomorphic deformations around the template image is referred to as the "atlas".

By "diffeomorphic deformation", it is meant a smooth and invertible transformation that can be applied to the template image so as to deform the template image into another medical image, such as any medical image of the dataset or any input medical image representing the organ for a new patient. The smoothness of the diffeomorphic deformation ensures that the deformation does not introduce discontinuities and artifacts (e.g., artificial defects) in the deformed medical image; the invertibility of the diffeomorphic deformation ensures that the deformation can be reversed.

For each medical image of the dataset, the diffeomorphic deformation applied to the template image to obtain the medical image may be defined by the parameters of said diffeomorphic deformation. These parameters, therefore, may follow a distribution.

For each medical image, the diffeomorphic deformation applied to the template image to obtain the medical image is defined in (e.g., belongs to) a class of diffeomorphic deformations . The class of diffeomorphic deformations, that are explored during the minimization of the loss, may be the class of all diffeomorphisms. Computationally, the class of diffeomorphic deformations may be represented by any parameterization and/or approximation (i.e., a representative restriction) of the class of all diffeomorphisms. The approximation class may be sufficiently large that the template image can effectively be deformed into each medical image of the dataset sufficiently accurately (with at least one diffeomorphism of the approximation class). By "sufficiently accurately", it is meant that a discrepancy between the deformed medical image and the medical image of the dataset, as computed by a certain similarity metric, is below a predetermined (and sufficiently low) threshold. The approximation class / restriction may comprise non-rigid diffeomorphic deformations (such as, but not limited to, differential rotations, local scaling, local translation). The approximation class / restriction may comprise a set of parameters defining the restricted (e.g., approximated or admissible) class of diffeomorphic deformations. In examples, an implementation of restriction may comprise diffeomorphic deformations resulting from an exponentiation of a smooth stationary velocity field.

Thus, the generating method leverages diffeomorphic deformations applied to the template image to obtain medical images of the dataset, thereby enforcing spatial regularity and consistency of the atlas. In other words, the diffeomorphic deformation provides a medically relevant correspondence between the template image and the other medical image, in the sense that it puts in correspondence anatomical parts of the two patients that have the same biological function and/or anatomical location. As a result, together with the atlas, the template image forms a reference frame (corresponding to a template or reference patient, i.e., a patient that would have the template image for the organ under consideration) on which medical images of the organ for different real patients can be projected, to perform any relevant medical analysis or processing with respect to the template patient. The result can then be projected back to the real patient, so that relevant medical actions can be undertaken on the real patient.

The dataset may comprise more than 100, 200, 500 or 1000 medical images, each representing a same organ for different patients. The dataset may comprise 2D medical images or 3D medical images. The organ may be a coronary artery, a heart, a brain, a liver, a lung, or any other anatomical target of interest. The set of medical images may comprise images from one (e.g., the same) medical-imaging modality, such as CT-scan, MRI or PET. The medical image of the dataset may be aligned, i.e., the generating method may comprise aligning the medical images of the dataset, namely, the medical images may be pre-processed so as to have the same dimension and/or the same orientation and/or the same size. The alignment guarantees that the medical images of the dataset represent the same anatomical target in the patient's body and ensure a consistency within the dataset. Additionally or alternatively, the dataset may comprise, for each medical image, annotations and/or segmentations. Additionally or alternatively, the dataset may comprise, for each medical image, information about the patient demographics (e.g., age, sex, healthy or sick, disease state, if applicable) and imaging parameters. This way, with a richer dataset comprising ground truth annotations and/or segmentations, the generating method is able to better learn (e.g., recognize) regions of interest of the organ (e.g., an heart valve).

The generating method comprises obtaining at S100 an autoencoder A (e.g., a variational autoencoder) trained on a set of medical images, each representing the organ of different patients. This way, the generating method takes advantage of the latent representation of the autoencoder.

As known in the art, an autoencoder compresses, by the respective encoder, the input data (e.g., representing a medical image) into a lower-dimensional latent space. The input data is thus represented, in the latent space, by a latent vector (also referred to as latent code), that captures the key characteristics of the input data in a compressed form. The autoencoder reconstructs, by the respective decoder, an output data (e.g., representing another medical image) from the latent vector.

The autoencoder (e.g., the variational autoencoder) may comprise deep convolutional networks, using for example 5 to 20 convolutional layers, with 0 to 5 interleaved attention layers, for both the encoder and the decoder networks.

The presence of the autoencoder allows the generating method to benefit from the more compact representation of the latent vector in the latent space and from the key characteristics extracted by the autoencoder (while avoiding to be disturbed by other characteristics, i.e., those not captured by the latent vector, that would only form noise during the determining S120 and reduce accuracy of the result). Indeed, the autoencoder (e.g., the variational autoencoder) has been trained on a set of (e.g., aligned) medical images to learn a latent representation thereof. Moreover, the generating method benefits from the decoding properties of the autoencoder (e.g., variational autoencoder) to reconstruct a template image that resembles real medical images of the dataset. Hence, the generated template image amounts to a realistic medical image representing the organ of different patients.

The generating method takes further advantage of the latent space of the autoencoder (e.g., a variational autoencoder) while minimizing a loss which is a function of the latent vector and, for each medical image of the dataset, parameters of a diffeomorphic deformation applied to the template image to obtain the medical image. In other words, the minimization of the loss takes place (i.e., is performed) in the latent space of the autoencoder, thus benefitting of the lower dimensionality of the latent space to improve performance and reduce computational costs. The minimization of the loss may be performed by any gradient descent technique (e.g., a stochastic gradient descent). As the loss is a function of the latent vector and parameters of a diffeomorphic deformation, the minimization space (i.e., the domain of variables that are explored or spanned during the minimization) is a product of a set of domains that includes the latent space. During the minimization of the loss, then, the value of variables does vary in each respective domain of definition. The minimization is thus attained by directly varying the latent vector in the latent space and by varying each parameter in the respective domain of definition (i.e., exploring the class of diffeomorphic deformations).

Alternatively or optionally, in order to take the most of the latent space during the minimization, the parameters of the diffeomorphic deformation may be a result of a neural network that takes as input the latent vector and an encoded representation of the medical image of the dataset. This way, the parameters may be functions of the neural network parameters that are defined in the latent space of the autoencoder. The minimization is thus attained by directly varying the latent vector in the latent space and by varying the neural network parameters (i.e., by indirectly varying the parameters of the diffeomorphic deformation and, thus, exploring the class of diffeomorphic deformations) in the latent space. The generating method, in determining at S120 the template image, adopts a loss which includes a first term and a second term. The first term penalizes a discrepancy (e.g., minimizes a dissimilarity) between a posterior probability of the parameters of the diffeomorphic deformation applied to the template image to obtain each medical image of the dataset, given the respective medical image, and a Gaussian prior probability of the parameters of the diffeomorphic deformation applied to the template image to obtain each medical image of the dataset. In other words, the first term of the loss function ensures that the posterior probability follows a Gaussian distribution in the latent space.

The second term penalizes (e.g., minimizes) a negative log-likelihood of the set of medical images of the dataset, given the latent vector and the parameters of the diffeomorphic deformation applied to the template image to obtain each medical image of the dataset. In other words, the second term of the loss measures how well the decoder reconstructs the input data (e.g., representing the medical image) from the latent vector and the parameters of the diffeomorphic deformation applied to the template image.

The generating method, therefore, amounts to a combination of a probabilistic approach and a deformation (e.g., geometric) approach. Such a combination is implemented in the latent space of the pre-trained autoencoder to discard the unnecessary details of images for generating the template image.

Optional features of the generating method are now discussed.

The generating method, in the determining S120 of the template image, may include training a neural network (e.g., a registration network). In other words, the loss minimized by the determining S120 is expressed as a function of a neural network, and the determining S120 performs a minimization of the loss that (simultaneously) varies parameters of said neural network (thereby resulting in a "trained" version of the neural network). The neural network may take as input, for each medical image, the latent vector and a result of applying the encoder to the medical image (i.e., another latent vector representing the medical image in the latent space). The neural network may predict the parameters of the diffeomorphic deformation applied to the template image to obtain each medical image of the dataset. The neural network may have a U-Net like architecture, with 5 to 20 convolutional layers and with 0 to 5 attention layers in between.

Therefore, the neural network exploits the latent representation of the autoencoder, because the neural network is trained with latent data (i.e., data encoding information in the latent space) representing the latent vector associated with the template image and another latent vector associated with the input medical image. In other words, the generating method may learn diffeomorphic deformations from the latent space of the autoencoder (e.g., variational autoencoder), thereby benefitting from the more compact representation and from the key ingredients extracted by the autoencoder to learn accurate deformations of the medical images of the dataset.

Moreover, the parameters of the diffeomorphic deformation, for each respective medical image of the dataset and a given template image, may be approximated in the loss function by the result of applying a neural network, the neural network having respective neural network parameters (e.g. weights and/or biases), and said neural network parameters may be variables of the minimization. In other words, during the minimization of the loss, the neural network parameters may vary in their respective domain in order to attain a minimum of the loss. As the parameters of the diffeomorphic deformation may be functions of said neural network parameters, exploring (e.g., spanning) said neural network parameters amounts to exploring (e.g., spanning) the class of diffeomorphic deformations.

In determining S120 the template image by minimizing a loss function, the first term of the loss function, i.e., the term penalizing a discrepancy between the posterior probability and the Gaussian prior probability, may be a divergence, such as a Kullback-Leibler divergence, between the posterior probability and the Gaussian prior probability.

The Gaussian prior probability may be centered, i.e., the numerical value of the mean of the Gaussian prior probability may be set to zero.

As known in the art, a divergence and in particular the Kullback-Leibler divergence provides a quantitative indication of how one probability distribution differs from a second, expected (e.g., approximated) probability distribution.

The diffeomorphic deformation of the generating method may be a result of an exponentiation of a smooth stationary velocity field. The exponentiation of a smooth stationary velocity field guarantees the smoothness (i.e., the regularity) and the invertibility of the diffeomorphic deformation. In other words, the class of diffeomorphic deformations may be that one defined by an exponentiation of a smooth stationary vector field. This way, the class of diffeomorphic deformations may be defined by properties of the smooth velocity field (e.g., stationarity, smoothing kernel, and other parameters of the smooth velocity field). By "velocity field", it is meant a plurality of vectors, each assigned to a point of a medical image (e.g., assigned to a pixel, in case of a 2D medical image or a voxel, in case of a 3D medical image) and indicating how the point of the medical image may move to be aligned (e.g., during a diffeomorphic deformation) with a point of another medical image. A "stationary velocity field" is a velocity field that, at each point of a medical image, does not change with time. A "smooth stationary velocity field" is a stationary velocity field that is continuously differentiable (i.e., regular, e.g., without jumps, bumps or defects). The generating method thus significantly differs from approaches that would consist in modifying pixel or voxel content to perform the deformation. This allows to a template image that is realistic medical image, consistent with the dataset (i.e., it looks like an medical image of the dataset) and accurate in reproducing anatomical details of the organ.

The smooth stationary velocity field may be obtained by computing a smoothing kernel at control points of a medical image.

The smoothing kernel may be a mathematical function defined on input data (e.g., the points of a medical image). The smoothing kernel helps reducing noise in the input data, thereby increasing a signal-to-noise ratio in the input data. The smoothing kernel further ensures the smoothness property of the stationary velocity field before the exponentiation. In other words, the smooth kernel prevents unrealistic or abrupt deformations.

The smoothing kernel may be a Gaussian kernel.

Any medical image herein may be discrete, i.e., the generating method may sample the medical image at intervals (e.g., regular intervals) to create a grid of points. Each point of the grid may correspond to a pixel or a voxel of the medical image. Each point of the grid may be associated with a value (e.g., a discrete value from 0 to 255, in case of a 8-bit medical image) representing an intensity of the pixel, in case of a 2D medical image, or the voxel, in case of a 3D medical image.

A control point of a medical image may be a point of the grid of the medical image that controls (e.g., parametrizes) the diffeomorphic deformation applied to the medical image. In other words, control points are reference points (e.g., landmarks) in the grid of points of the medical image.

The generating method may comprise sampling control points on the grid of points and may assign, at each control point, a respective parameter of the diffeomorphic deformation applied to the medical image. This way, i.e., by parametrizing the diffeomorphic deformation at each control point, the generating method decreases the number of degrees of freedom (i.e., the number of independent parameters that parametrizes the deformation). The degrees of freedom may comprise translations, rotations, scaling and other complex deformations. In other words, the computing of the smoothing kernel at control points, each being attached with a respective parameter of the diffeomorphic deformation, amounts to reducing the computational load of the processor (i.e., CPU) of the underlying system (e.g., a computer system comprising a processor). Moreover, this way, the generating method adopts a targeted smoothing, thereby improving the accuracy and realism of the deformation and reducing biases (e.g., introduced by pixels or voxels with high intensity values).

The set of medical images, representing the organ for different patients, may comprise images (e.g., real images being obtained) from any one of the following medical-imaging modalities: Autorefraction, Angioscopy, Bone Densitometry (US), Biomagnetic Imaging, Bone Densitometry (X-Ray), Color Flow Doppler, Cinefluoroscopy, Colposcopy, Computed Radiography, Cystoscopy, Computed Tomography, Duplex Doppler, Digital Fluoroscopy, Diaphanography, Digital Microscopy, Digital Subtraction Angiography, Digital Radiography, Echocardiography, Electrocardiography, Cardiac Electrophysiology, Endoscopy, Fluorescein angiography, Fiducials, Fundoscopy, General Microscopy, Hard Copy, Hemodynamic Waveform, Intra-Oral Radiography, Intraocular Lens Data, Intravascular Optical Coherence Tomography, Intravascular Ultrasound, Keratometry, Lensometry, Laparoscopy, Laser Surface Scan, Magnetic Resonance Angiography, Mammography, Magnetic Resonance, MR T1 weighted, MR T2 weighted, MR Proton density weighted, MR Steady-state-free precession, MR Effective T2, MR Susceptibility-weighted, MR Short-tau inversion recovery, MR Fluid-attenuated inversion recovery, MR Double inversion recovery, MR Conventional diffusion weighted, MR Apparent diffusion coefficient, MR Diffusion tensor, MR Dynamic susceptibility contrast, MR Arterial spin contrast, MR Dynamic contrast enhanced, MR Blood-oxygen-level dependent imaging, MR Time-of-flight, MR Phase contrast, Magnetic Resonance Spectroscopy, Nuclear Medicine, Ophthalmic Axial Measurements, Optical Coherence Tomography (non-Ophthalmic), Ophthalmic Photography, Ophthalmic Mapping, Ophthalmic Refraction, Ophthalmic Tomography, Ophthalmic Visual Field, Optical Surface Scan, Other, Positron Emission Tomography (PET), Panoramic X-Ray, Respiratory Waveform, Radio Fluoroscopy, Radiographic Imaging (conventional film/screen), Radiotherapy Dose, Radiotherapy Image, Radiotherapy Plan, Radiotherapy Treatment Record, Radiotherapy Structure Set, Segmentation, Slide Microscopy, Stereometric Relationship, Single-Photon Emission Computed Tomography (SPECT), Automated Slide Stainer, Thermography, Ultrasound, A-mode US, B-mode US, M-mode US, Visual Acuity, Videofluorography, X-Ray Angiography, and External-Camera Photography.

By "medical-imaging modality", it is meant a type of imaging technique that utilizes a certain physical method to detect patient internal signals in order to observe either anatomical structures or physiological events. An image of a certain medical-imaging modality is thus the result of a transfer function of the biological, structural and physiological properties of the patient's tissues to an intensity space (generally 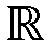 ) to reflect a desired property. Medical imaging modalities can differ by the physical mechanism they use, the physical sensor used to capture the image, the parameters of the sensor during the acquisition, the use of contrast agents, the delay between the injection of contrast agent and the acquisition, or the processing of the signal after the acquisition.

The generating method, in the obtaining S100 of the autoencoder (e.g., variational autoencoder), may comprise training the autoencoder. The autoencoder (e.g., the variational autoencoder) may be trained on the dataset obtained in S100, i.e., the same dataset comprising the set of medical images.

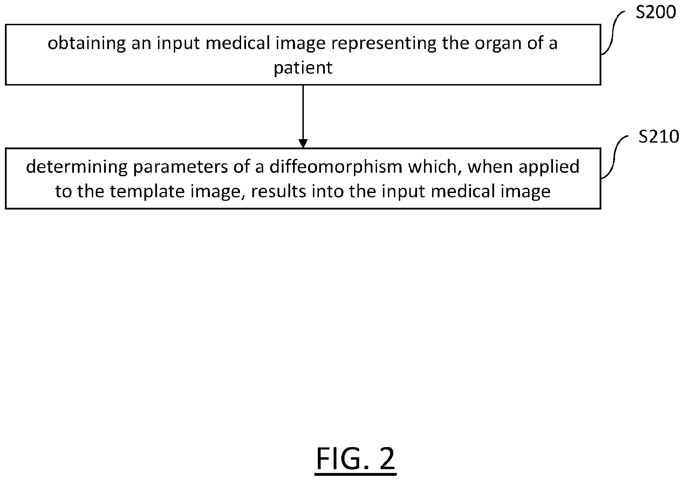

With reference to the flowchart of FIG. 2, it is provided a computer-implemented method of use of a template image of an organ generated according to the generating method, and hereafter referred to as the "method of use". The method of use comprises obtaining S200 an input medical image representing the organ of a patient, and determining S210 parameters of a diffeomorphism which, when applied to the template image, results into the input medical image.

Such a method of use forms an improved solution for using a template image of an organ.

Notably, such a method of use, given an input medical image (e.g., obtained by a certain medical-imaging modality) and a template image (e.g., generated from a dataset comprising medical images obtained from the same medical-imaging modality), determines the parameters of the diffeomorphism that transforms the template image onto the input medical image. Otherwise said, the method of use predicts parameters of a diffeomorphism by instantiating (i.e., deforming) the template image onto the input medical image.

The method of use exploits the template image, that can be thought of as a reference image representing an organ, to perform a patient-specific task of determining the parameters of the diffeomorphism that transforms the template image onto the input medical image representing the organ of the specific patient.

Moreover, by applying the diffeomorphism to the template image, the method of use provides an accurate and reliable instantiation of the template image to be aligned with the input medical image representing the organ of the patient. Indeed, the method of use provides the most probable parameters of the diffeomorphism applied to the template image, given an input medical image. The most probable parameters of the diffeomorphism are those parameters that maximize the posterior probability.

Optional features of the method of use are now discussed.

The diffeomorphism, in the determining S210 of the parameters, may be of (e.g., determined among) the same class of diffeomorphic deformations explored during the determining S120, or alternatively, of a different class. Optionally, the parameters determined in S210 may be predicted by the neural network optionally trained while performing the determining S120. In other words, the method of use may comprise the neural network trained during the determining S120, that takes as input the template latent vector (i.e., the latent vector corresponding to the template image) and another latent vector being the result of applying the encoder to the input medical image. The parameters are thus the result (i.e., the output) of said neural network and the associated diffeomorphism is the most probable deformation, given the input medical image and the template image.

The method of use may further comprise aligning the input medical image and the template image. The aligning of the input medical image may occur before the determining S210. In examples, the aligning of the input medical image may occur after obtaining S200 an input medical image and before the determining S210. The aligning enhances the accuracy of the determining S210.

The template image of an organ used by the method of use may comprise data representing a medical segmentation of the template image and/or one or more medical annotations on the template image.

An annotation of a medical image refers to any type of spatial indication manually or automatically added to describe, enrich or analyze the medical image. Examples of annotations may comprise measurements of elements of the images and any type of indications of a region of interest (boxes, arrows) with associated labels. The annotation of a medical image may help identifying and categorizing different parts of the anatomical target, such as marking a region as a tumor or labeling a region of interest as showing a specific condition. For instance, annotations may mark the location and size of a tumor in a medical image obtained by an MRI scan or labeling a bone fracture in a medical image obtained by an X-ray scan.

A segmentation of a medical image refers to partitions of an area of interest of a medical image. A segmentation may exploit an annotation previously performed in an area of interest of a medical image.

The method of use may further comprise projecting the data (e.g., a medical annotation and/or a medical segmentation) on the input medical image based on the determined parameters of the diffeomorphism.

The method of use may further comprise displaying a representation of the deformed (also referred to as instantiated) medical image on a screen of the computer system. The displaying may comprise showing, on the same screen (e.g., on a respective portion of the screen), the input medical image, the template image and the instantiated medical image (i.e., the medical image resulting from the application of the diffeomorphism to the template image). The displaying may allow a practitioner viewing the screen to compare the input medical image, the template image and the instantiated medical image, and portions thereof. The displaying may trigger a medical action (e.g., by a practitioner viewing the screen), such as diagnosis, further medical tests, and/or medical treatment (e.g., new treatment or treatment adaptation), based on the result of the comparison.

Additionally or alternatively, the method of use may further comprise (i) analyzing (e.g., segmenting) the instantiated medical image, (ii) extracting medically relevant features from the analyzed instantiated medical image, (iii) classifying the extracted medically relevant features (e.g., benign or malignant), and (iv) outputting diagnostic information and/or treatments.

The generating method and the method of use are computer-implemented. This means that steps (or substantially all the steps) of the generating method and the method of use are executed by at least one computer, or any system alike. Thus, steps of the generating method and the method of use are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or predefined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

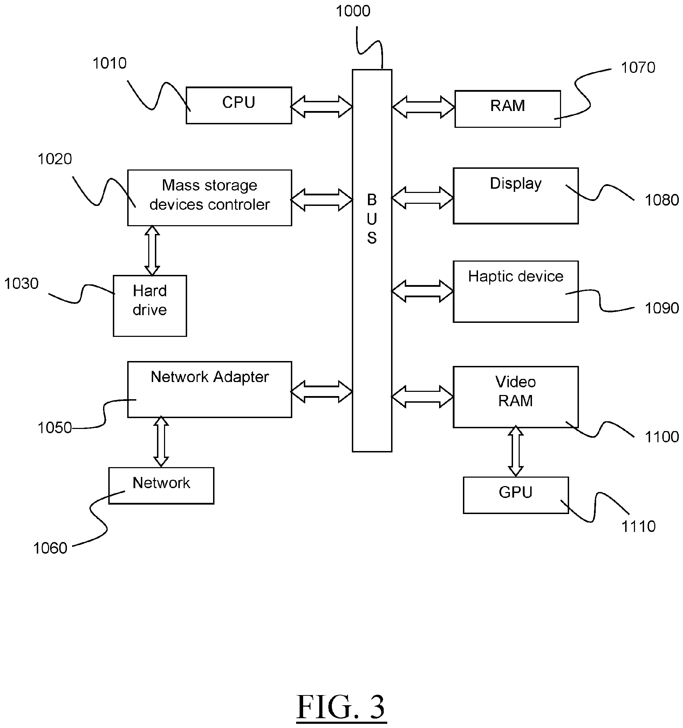

FIG. 3 shows an example of the system, wherein the system is a client computer system, e.g. a workstation of a user.

The computer of the example comprises a central processing unit (CPU) 1010 connected to an internal communication BUS 1000, a random access memory (RAM) 1070 also connected to the BUS. The computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the computer system may comprise a sensitive pad, and/or a sensitive screen.

The computer program may comprise instructions executable by a computer, the instructions comprising means for causing the above system to perform the generating method and/or the method of use. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. The steps of the method may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method(s) to be performed on the cloud computing environment.

An example of implementation of the generating method is first summarized, for the sake of presentation, as follows.

The generating method may rely on unsupervised deep learning models (e.g., deep convolutional networks) that register medical images and learn deformable templates. By "registering a medical image" is meant the process of aligning a first image with a second image, i.e., transforming a first image onto a second image.

For this purpose, the generating method comprises obtaining a dataset S100 comprising a set of medical images representing the organ of different patients.

The generating method comprises obtaining S100 an auto-encoder. The autoencoder may be a variational autoencoder. The autoencoder (e.g., variational encoder) includes an encoder and a decoder. The autoencoder (e.g., variational encoder) has been trained (e.g., pre-trained) on a set of images, each representing the organ of different patients, to learn a latent representation of the medical images (e.g., of the shapes and contours of the organ represented in the medical images). The autoencoder (e.g., the variational autoencoder) may be trained on the dataset obtained in S100 comprising the set of medical images.

The latent representation of the autoencoder may be used around (i.e., coupled with) a registration model (e.g., a registration neural network) to make it take as input latent codes (e.g., latent vectors) for the input medical images, and to output the parameters of a deformation map (e.g., transformation). More precisely, the resulting deformation is computed using a diffeomorphic deformation model and applied to the decoded medical images. By "decoded medical images", it is meant the result of applying a decoder to the latent codes. Used in this way, the registration model is capable of learning deformations that register images, only using their latent representations.

The generating method adopts a probabilistic model, that shall be described later in detail. This way, the generating method enforces the generated template image to be a representative of the medical images of the dataset, and prevents it from becoming too noisy. The probabilistic model additionally learns the deformations that map the template image to the medical images of the dataset, resulting in an atlas of deformations around the template image that can be sampled to generate new medical images.

The example of the implementation is now detailed.

The generating method comprises obtaining a dataset S100 comprising a set of medical images representing the organ of different patients. The set of medical images may comprise independent identically distributed data samples *X =* (*xᵢ*)_{1≤*i*≤*N*} following a data distribution *p*(*x*)*.* Here *N* represents the total number of samples, e.g., 100, 200, 500 or 1000 medical images. Each *xᵢ* is data representing a medical 2D or 3D image, that is an element of, respectively, ${ℝ}^{H \times W \times d}$ or ${ℝ}^{D \times H \times W \times d}$ where *D, H, W* stand for depth, height and width (i.e., the spatial dimensions of the medical image) and d stands for the number of channels of the medical image. Medical images may be seen as discretization of functions from the medical image's grid domain Ω to ${ℝ}^{d}$ for geometric purposes. Such a discretization may be useful to for the deformation model that shall be discussed later.

The generating method comprises obtaining S100 an autoencoder. The autoencoder may be a variational autoencoder.

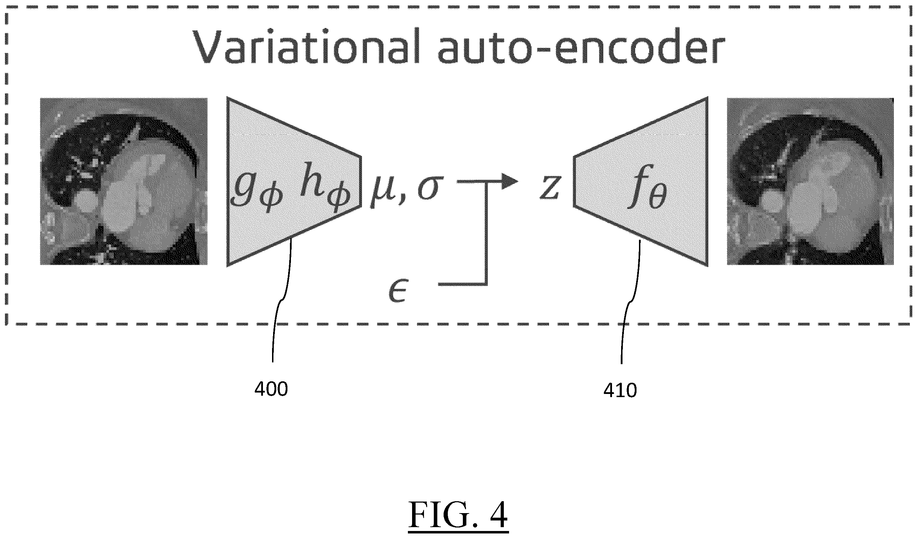

FIG. 4 shows a schematic representation of a variational autoencoder.

The variational autoencoder includes an encoder 400 and a decoder 410. The autoencoder (e.g., the variational autoencoder) may comprise deep convolutional networks, using for example 5 to 20 convolutional layers, with 0 to 5 interleaved attention layers, for both the encoder and the decoder networks.

The variational autoencoder may be a latent probabilistic model including two models: a probabilistic encoder *p_{θ}*(*z*|*x*), that is the posterior probability of a latent code *z* given (i.e., conditioned by) an observation *x* (i.e., an input data representing a medical image), and a probabilistic decoder *p_{θ}*(*x*|*z*), that is the likelihood of data *x* given the latent code *z.* Computing the posterior distribution *p_{θ}*(*z*|*x*), or estimating the maximum of the likelihood, may be intractable most of the times. An approach to overcome this issue may be that one of using variational inference: the posterior probability *p_{θ}*(*z*|*x*) is approximated by another distribution *q_{ϕ}*(*z*|*x*), chosen from a parametric family of distributions (e.g., a Gaussian distribution). Approximating the posterior probability *p_{θ}*(*z*|*x*) with another distribution *q_{ϕ}*(*z*|*x*) amounts to maximizing the evidence lower bound which, with the correct assumptions (e.g., the probability *p_{θ}*(*x*|*z*) may be a Gaussian with mean given by *f_{θ}*(*z*) and standard deviation given by *c;* the prior probability on *z* may be a centered and scaled Gaussian; the parametric family of distributions *q_{ϕ}*(*z*|*x*) may be a family of Gaussian distributions parametrized by the mean *g_{ϕ}* and variance *h_{ϕ}*), amounts to minimizing the following loss function of the variational autoencoder: ${L}_{VAE} = {E}_{z ∼ q \left(\left.z\right|x\right)} \left[\frac{{\left‖x-{f}_{θ}\left(z\right)\right‖}^{2}}{2 {c}^{2}}\right] - KL \left(N\left({g}_{ϕ}\left(x\right),{h}_{ϕ}\left(x\right)\right)\left‖N\left(0, I\right)\right.\right)$ where *f_{θ}* is a function parametrized by a neural network giving the mean of the decoder probability distribution, *g_{ϕ}* and *h_{ϕ}* are functions parametrized by another neural network giving, respectively, the mean and variance of the approximated posterior distribution *q_{ϕ}*(*z*|*x*), *z* is obtained by sampling this posterior distribution, and *KL*(· || ·) stands for the Kullback-Leibler divergence between the Gaussian distribution 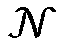 (*g_{ϕ}*(*x*), *h_{ϕ}*(*x*)) with mean *g_{ϕ}* and variance *h_{ϕ}* and the standard Gaussian distribution 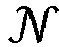 (0, *I*) of mean zero and unit variance. The parameter c is the variance of the probabilistic decoder in the autoencoder network; the higher the value, the higher the noise around decoded values, and thus, the decoder encourages regularization over reconstruction of the decoded image. Typical values of the variance *c* may range from 1 to 10⁻⁶ depending on the desired regulation power.

The generating method may thus use this variational autoencoder model to learn a regularized latent space for the input data.

The generating method may comprise a diffeomorphic deformation model, which is now described.

An example of diffeomorphic deformation model may comprise a smooth vector field (e.g., a smooth velocity field). A smooth velocity field, *v*: Ω → *T*Ω, is a map from the medical image domain Ω to a respective tangent space *T*Ω. In other words, the smooth velocity field is such that each point of the medical image is associated with a smooth velocity vector. The smooth velocity vector is an element of the tangent space, which is a vector space including vectors tangent to the point of the medical image. The smooth velocity field may be a smooth stationary velocity field.

The diffeomorphic deformation associated with the smooth stationary velocity is a map ${ϕ}_{t}^{v} : Ω \to Ω$ from the medical image domain Ω onto itself. The diffeomorphic deformation may be defined by the following system of equations: $\left\{\begin{matrix}\frac{\partial {ϕ}_{t}^{v}}{\partial t} = v ∘ {ϕ}_{t}^{v} \\ {ϕ}_{0}^{v} = {id}_{Ω}\end{matrix}\right.$ where the first equation amounts to an evolution equation of the diffeomorphic deformation and the second equation amounts to an initial condition (i.e., the diffeomorphic deformation applied to a medical image at an initial time, *t* = 0, is the identity function on the medical image domain Ω). This gives a geometric way of parametrizing spatial deformation via velocity fields (e.g., smooth stationary velocity fields). Additionally, having a stationary velocity field allows using a scaling-and-squaring technique, to accelerate (i.e., to speed up) the computation of the diffeomorphic deformation. The scaling-and-squaring technique relies on the algebraic property of the exponential, that is exp(*v* + *w*) = exp(*v*) ∘ exp (*w*) if *v* and w commute, and on an approximation of the exponential for small velocity fields exp(*v*) = *id*_{Ω} + *v* + *o*(∥*v*∥). Using this property and approximation, one computes the diffeomorphic deformation ${ϕ}_{1}^{v}$ associated to the velocity with the formula: ${ϕ}_{1}^{v} = exp \left(v\right) = {\left({id}_{Ω}+\frac{v}{{2}^{s}}\right)}^{{2}^{s}}$ where s is a scaling-and-squaring factor. The a scaling-and-squaring factor may be set to a predetermined numerical value (e.g., an integer number between 5 and 10 or between 7 and 12).

To improve the performance of the diffeomorphic deformation, and ensure smooth stationary velocity fields, the smooth stationary vector field *v* may be obtained by computing (e.g., evaluating) a smoothing kernel, $k : Ω \times Ω \to ℝ$, at control points {*qⱼ*} of a medical image (e.g., the control points being a point on a grid or a sub-grid of the medical image). Each control point *qⱼ* may be attached with a respective parameter, denoted by *pⱼ,* of the diffeomorphic deformation applied to the medical image. The smooth stationary velocity field may be parametrized as: *v*(*x*) → (*k* ★ *p*)(*x*) = ∑*ⱼk*(*qⱼ, x*)*pⱼ.* The smoothing kernel may be a Gaussian kernel, e.g., $k \left(x, y\right) = k \left(x-y\right) ∝ exp \left(-\frac{{\left‖x-y\right‖}^{2}}{2 {ω}^{2}}\right)$ with scale *ω* that may be set to at a tenth of the image size. The scale *ω* may be a tunable hyperparameter that controls the regularization of the diffeomorphic deformations. Typical values may be in the range *ω* ∈ [0.01, 0.5] in case the image size is normalized, e.g., considered to be 1.

The diffeomorphic deformations (e.g., spatial deformation), resulting from the diffeomorphic deformation model, act on a medical image domain Ω by deforming the medical image domain Ω (also referred to as ambient space), so one has *ϕ · f = f* ∘ *ϕ*⁻¹, where $f : Ω \to {ℝ}^{d}$ is a medical image and *ϕ* is a diffeomorphic deformation, the dot in the left-hand side denotes an action of the deformation on the medical image (i.e., the action of the deformation group on the medical images), the circle in the right-hand side denotes a composition of functions. For the sake of simplicity, the generating method may compute the diffeomorphic deformation associated to the inverse deformation *ϕ*⁻¹ to avoid an unnecessary inversion of the diffeomorphic deformation *ϕ*.

The probabilistic model is now described.

The purpose of the generating method is to generate a template image of an organ. Let *τ* denote the template image. For each medical image *xᵢ* of the dataset, the generating method may compute a diffeomorphic deformation *ϕᵢ* that deforms the template image *τ* to be as close as possible to the medical image *xᵢ* of the dataset. Each diffeomorphic deformation *ϕᵢ* may be parametrized by parameters *pᵢ*, following the presented diffeomorphic deformation model discussed earlier.

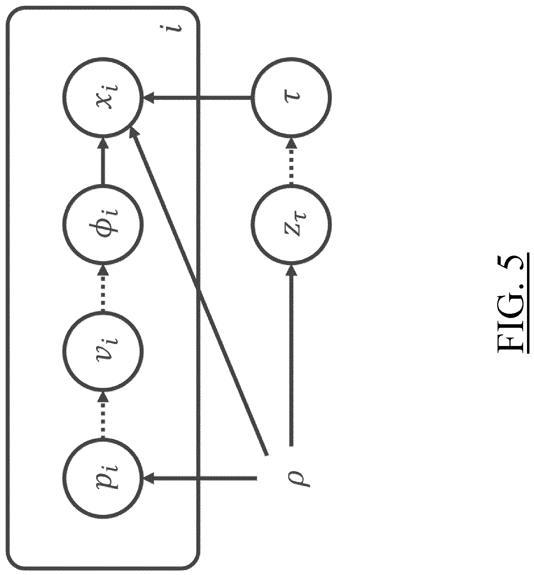

FIG. 5 shows a graphical representation of the probabilistic model, wherein dashed lines represent the deterministic parametrization of the latent variables (and can be thought of as Dirac distributions in the probabilistic context), whereas solid lines represent conditional probabilities of the probabilistic model.

The probabilistic model *p_{ρ}* may (e.g., simultaneously) predict both the template image and the velocity fields (e.g., the smooth stationary velocity fields). In other words, the probabilistic model may (e.g., simultaneously) predict both the template image and the parameters of a diffeomorphic deformation applied to the template image to obtain the medical image.

Let *z_{τ}* be an element (i.e., a latent code or a latent vector) of the latent space of the previously trained variational autoencoder, and let the template image *τ* = *f_{θ}*(*z_{τ}*) be the mean of the likelihood distribution *p_{θ}*(*x*|*z*) associated to this latent code (i.e., *z_{τ}*). This way, the template image *τ* may represent (i.e., look like) a medical image of the dataset if the variational autoencoder has been properly trained and the prior distribution *p_{θ}*(*z_{τ}*) imposed on the latent space of the variational autoencoder is the standard Gaussian distribution, i.e., *p_{θ}*(*z_{τ}*) → 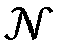 (0, *I*).

The probabilistic model may also define a prior probability distribution of the parameters of a diffeomorphic deformation. Such a prior distribution may be the Gaussian prior probability of the parameters of the diffeomorphic deformation applied to the template image to obtain each medical image of the dataset. The Gaussian prior probability of the parameters encourages smooth diffeomorphic deformations, via the usage of the smoothing kernel introduced in the parametrization of stationary velocity fields. The Gaussian prior probability may be centered. The Gaussian prior probability of the parameters of the diffeomorphic deformation, collectively denoted as 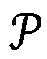 → (*pᵢ*)_{1≤*i*≤}*_{N},* may be independent from the template variable *z_{τ}* and may read as: ${p}_{ρ} \left({p}_{i}\right) = N \left({p}_{i}; 0; {K}^{- 1}\right)$ where *K =* (*k*(*i, j*))_{1*≤i,j*≤*D*×*H*×*W*} is the smoothing kernel matrix containing the values of the smoothing kernel for each pair of points (e.g., control points) on the grid. In fact, one can rewrite this as: $log {p}_{ρ} \left({p}_{i}\right) = - \frac{1}{2} {p}_{i}^{T} {Kp}_{i}$ This prior distribution regularizes the initial parameters by means of the smoothing kernel norm *p^{T} Kp,* which enforces smoothness of the velocity fields, and thus smoothness of the associated flows *ϕ^{Kp}.*

Thus, as the template variable *z_{τ}* and the parameters of the diffeomorphic deformation 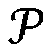 → (*pᵢ*)_{1≤*i*≤*N*} may be independent, the prior probability (e.g., *p_{ρ}*( 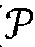 *, z_{τ}*)) of the parameters of the diffeomorphic deformation applied to the template image to obtain each medical image of the dataset, may be product of (i) the prior distribution *p_{θ}*(*z_{τ}*) imposed on the latent space of the variational autoencoder and (ii) prior probability of the parameters of the diffeomorphic deformation *p_{ρ}*(*pᵢ*).

The data likelihood of the probabilistic model, i.e., likelihood of the set of medical images of the dataset, given the latent vector and the parameters of the diffeomorphic deformation applied to the template image to obtain each medical image of the dataset, writes as: ${p}_{ρ} \left({x}_{i}\left|{p}_{i}, τ\right.\right) = N \left({x}_{i};τ∘{ϕ}^{{Kp}_{i}},{σ}^{2}I\right)$ where *τ* denotes the template image and *τ* ∘ *ϕ^{Kpⁱ} = ϕ^{Kpⁱ}* ∘ *τ* = exp(*Kpᵢ*) o *τ* is the template image deformed by the diffeomorphic deformation *ϕ^{Kpⁱ}* resulting from the known parameters of the smooth stationary velocity field *Kpᵢ.* The parameter *σ* is the variance of the probabilistic decoder in the registration network; the higher the value, the higher the noise around decoded values, and thus, the decoder encourages regularization over reconstruction of the decoded image. Typical values of the variance *c* may range from 1 to 10⁻⁶ depending on the desired regulation power.

With the purpose of (e.g., simultaneously) predicting the latent vector *z_{τ}* and the parameters 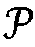 → (*pᵢ*)_{1≤*i*≤*N*} of a diffeomorphic deformation, the posterior probability of the parameters of the diffeomorphic deformation applied to the template image to obtain each medical image of the dataset, given the respective medical image, denoted as *p_{ρ}*( 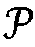 , *z_{τ}*| 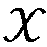 ), may be approximated by another expected distribution, denoted as *q_{ψ}*( 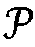 , *z_{τ}*| 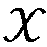 ) by using the variational inference. The approximated posterior distribution *q_{ψ}*( 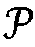 , *z_{τ}*| 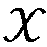 ) may be a Gaussian distribution with respective mean and variance.

The probabilistic model, indeed, may comprise two neural networks (e.g., two separate neural networks), each neural network respectively corresponding to the independent variables *z_{τ}* and 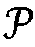 . A first neural network for parametrizing the template image probability distribution ${z}_{ψ} ∼ N \left({μ}_{z}, {σ}_{z}^{2}\right)$, with respective mean *µ_{z}* and respective variance ${σ}_{z}^{2}$ of the approximated posterior distribution *q_{ψ}*( 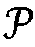 , *z_{τ}*| 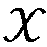 ), and a second neural network (e.g., the registration model or registration network), *r_{ψ}*( 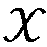 , *z_{τ}*) → {(*µᵣ*( 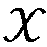 *, z_{τ}*), *σᵣ*( 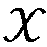 , *z_{τ}*)} for predicting the parameters of the diffeomorphic deformation applied to the template image to obtain each medical image of the dataset. Both neural networks may thus predict the mean and variance of the respective posterior distributions. The registration network may have a U-Net like architecture, with 5 to 20 convolutional layers and with 0 to 5 attention layers in between. This way, the predicted parameters may have a same spatial resolution of the latent images (i.e., the latent vectors representing the encoded medical images); this, moreover, provides a sufficient number of degrees of freedom to the probabilistic model.

The generating method determines S120 the template image as a result of applying the decoder to a latent vector *z_{τ}*, by minimizing a loss which is a function of the latent vector *z_{τ}* and, for each medical image *xᵢ* of the dataset 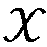 , parameters 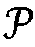 = (*pᵢ*)_{1≤*i*≤*N*} of a diffeomorphic deformation applied to the template image to obtain the medical image.

The loss may minimize a dissimilarity (e.g., a discrepancy) between the approximate posterior *q_{ψ}*( 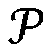 , *z_{τ}*| 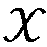 ) and the true (e.g., actual or exact) posterior *pₚ*( 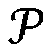 , *z_{τ}*| 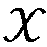 ). The loss may be the Kullback-Leibler divergence between the approximate posterior and the true posterior, e.g., *KL* (*q_{ψ}*( 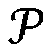 , *z_{τ}*| 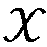 )∥*p_{ρ}*( 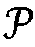 , *z_{τ}*| 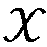 )).

The minimization may be performed over the latent vector *z_{τ}* and over the parameters *ψ* of the neural network that predicts the parameters of the diffeomorphic deformation applied to the template image to obtain each medical image of the dataset. The loss may thus read as: $\begin{matrix}arg min KL \left({q}_{ψ}\left(P,{z}_{τ}\left|X\right.\right)\left‖{p}_{ρ}\left(P,{z}_{τ}\left|X\right.\right)\right.\right) = \\ arg min KL \left({q}_{ψ}\left(P,{z}_{τ}\left|X\right.\right)\left‖{p}_{ρ}\left(P, {z}_{τ}\right)\right.\right) - {E}_{P , {z}_{τ} ∼ {q}_{ψ}} \left(P,{z}_{τ}\left|X\right.\right) \left[log {p}_{ρ}\left(X\left|P, {z}_{τ}\right.\right)\right] = \\ arg min KL \left({q}_{ψ}\left(P,{z}_{τ}\left|X\right.\right)\left‖{p}_{ρ}\left(P, {z}_{τ}\right)\right.\right) + {E}_{P , {z}_{τ} ∼ {q}_{ψ}} \left(P,{z}_{τ}\left|X\right.\right) \left[\frac{{\left‖{x}_{i}-τ∘{ϕ}^{{Kp}_{i}}\right‖}^{2}}{2 {σ}^{2}}\right] .\end{matrix}$

The loss (in the second line of the equation above) includes a first term and a second term.

The first term (in the second line of the equation above) of the loss may be the Kullback-Leibler divergence between:
o a posterior probability (e.g., a true posterior probability being approximated by another expected posterior probability *q_{ψ}*( 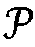 , *z_{τ}*| 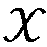 )) of the parameters of the diffeomorphic deformation applied to the template image to obtain each medical image of the dataset, given the respective medical image, and
o a Gaussian prior probability (e.g., *p_{ρ}*( 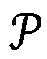 , *z_{τ}*)) of the parameters of the diffeomorphic deformation applied to the template image to obtain each medical image of the dataset.
In the example of the implementation, the first term may be computed in a closed form (i.e., exactly, in an analytic fashion) as both distributions are Gaussian distributions.

The second term (in the second line of the equation above) penalizes a negative log-likelihood (e.g., *-* log*p_{ρ}*( 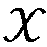 | 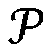 , *z_{τ}*)) of the set of medical images of the dataset, given the latent vector and the parameters of the diffeomorphic deformation applied to the template image to obtain each medical image of the dataset. In the example of the implementation, the second term reduces to a simple Mean Square Error data attachment term, although it may reduce to other types of loss functions by choosing different assumptions for the data likelihood.

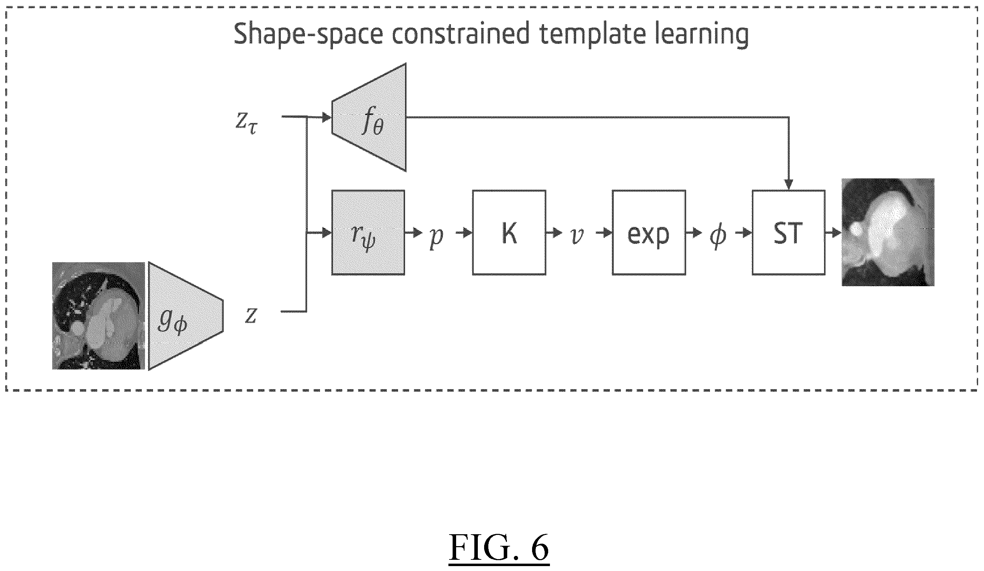

FIG. 6 shows a schematic representation of the probabilistic model. Grey boxes are neural network, white boxes are non-trainable layers that constitute the diffeomorphic deformation model. "ST" stands for Spatial Transform.

Once the minimization of the loss function is achieved, i.e., optimal parameters *ψ* and latent vector *z_{τ}* for the training dataset are determined, the result of applying the decoder to the latent vector *z_{τ}*, i.e., *τ = f_{θ}*(*z_{τ}*), determines S120 the template image. The template image *τ* thus provides a representative medical image of the organ, and it can be considered as a reference medical image of the dataset.

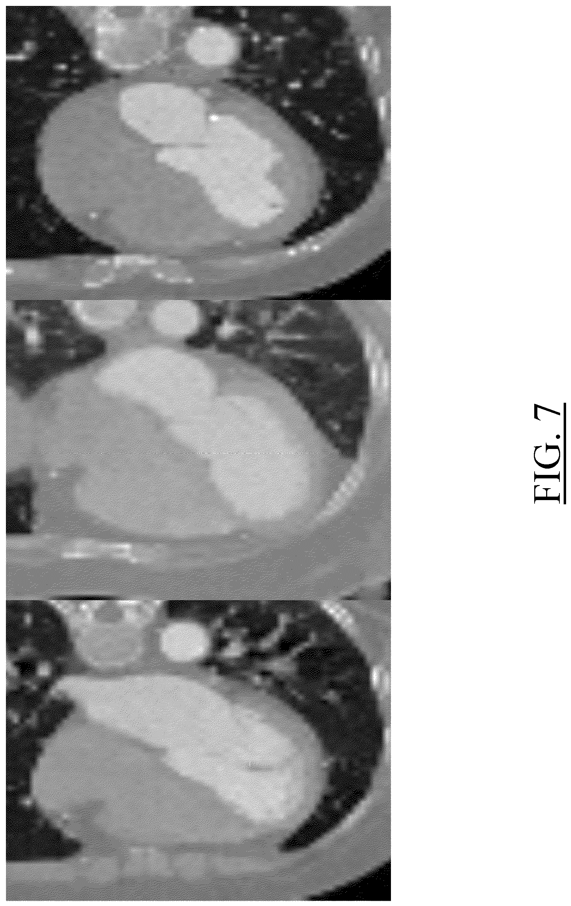

FIG. 7 shows an example of medical images obtained from the dataset obtained at S100. The dataset may contain a thousand (e.g., between 800 and 1200, e.g., 1000) medical images representing the heart of different patients. The dataset comprises a set of medical images obtained from a CT-scan. In examples, the medical images of the dataset may be separated into training volumes (e.g., 800 training volumes), validation volumes (e.g., 16 validation volumes), and volumes for testing (e.g., 184 volumes for testing). The generating method amounts to computing a template medical image and deformations thereof to geometrically match (e.g., by means of a diffeomorphic deformation) the medical images of the dataset.

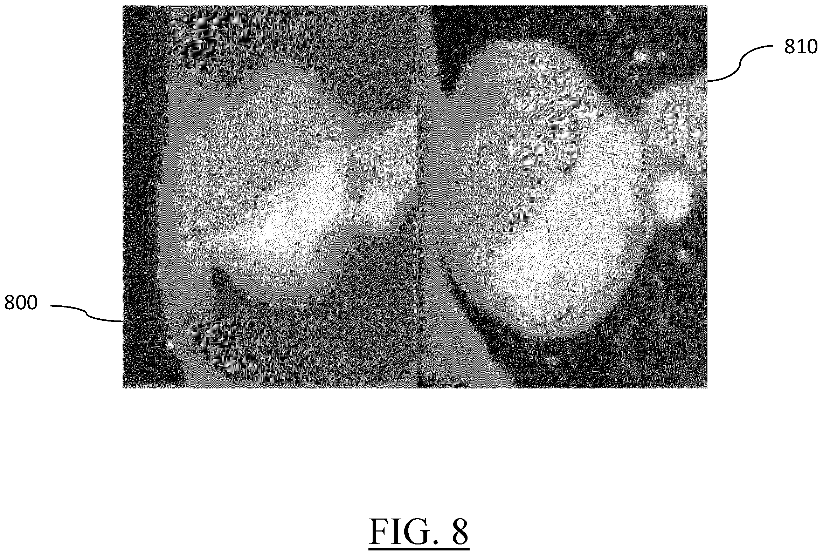

FIG. 8 shows a comparison of template images of a heart. The template image 800 was computed with a method of the prior art. The template image 810 was computed with the generating method of the present disclosure. The comparison between the template image 800 and the template image 810 shows that the template image 810 is a better representative image of a heart, i.e., the template image 810 better resembles real medical images of the dataset. In different words, the template image 810 amounts to a realistic medical image, which is consistent with the dataset. Moreover, the template image 810 is more accurate (e.g., detailed) in representing anatomical details of the organ (e.g., a heart). The higher level of accuracy and realism of the template image 810, computed by the generating method of the present disclosure, is achieved by the parametrization of the diffeomorphic deformation. For example, the template image 810 results in a medical image with a reduced bias (e.g., the bias introduced by pixels or voxels with high intensity values that, once averaged, results in blurry and unrealistic images like the template image 800).

An example of implementation of the method of use of a template image of an organ is now discussed.

The method of use comprises obtaining S200 an input medical image *xᵢ*, representing the organ of a patient.

The method of use determines S210 parameters (e.g., *pᵢ*) of a diffeomorphism which, when applied to the template image *τ*, results into the input medical image *xᵢ*. This way, the method of use amounts to a deformation of the template image *τ* onto the input medical image *xᵢ*.

The diffeomorphism of the method of use may be the diffeomorphic deformation of the generating method, as discussed above in the present disclosure. Optionally, the parameters determined in S210 of the method of use may the parameters predicted by the neural network *r_{ψ}*( 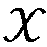 , *z_{τ}*), as described above. In this case, in order to instantiate (e.g., to deform) the template image onto an input medical image *xᵢ*, the method of use determines S210 the parameters *pᵢ* of a diffeomorphic deformation which, when applied to the template image, results into the input medical image. The parameters *pᵢ* are those that maximize the posterior probability *p_{ρ}*(*pᵢ*|*xᵢ, z_{τ}*), i.e., the posterior probability of the parameters of a diffeomorphic deformation, given the input medical image *xᵢ* and the latent vector *z_{τ}*. This may be achieved by the neural network *r_{ψ}* (also referred to as registration model/module or registration network) that has been trained to approximate the true posterior by predicting the mean and variance of the approximate posterior *q_{ψ}*(*pᵢ*|*xᵢ, z_{τ}*).

The method of use comprises obtaining S200 an input medical image. The obtaining S200 may comprise encoding (e.g., by the encoder of the autoencoder) the input medical image *xᵢ* as a latent vector (e.g., by computing *g_{ϕ}*(*xᵢ*)). The obtaining S200 may comprise feeding the latent vector of the input medical image *g_{ϕ}*(*xᵢ*) and the template latent vector *z_{τ}* into the registration module *r_{ψ}*.

The method of use determines (e.g., predicted) S210 parameters of a diffeomorphism. The parameters of the diffeomorphism (e.g., of the diffeomorphic deformation) may be an output of the registration module, i.e., *pᵢ = r_{ψ}*(*g_{ϕ}*(*xᵢ*), *z_{τ}*). The parameters of the diffeomorphism (e.g., of the diffeomorphic deformation) may be the mean (i.e., corresponding to the maximum value) of the approximate posterior probability distribution. The associated diffeomorphic deformation *ϕᵢ* = *ϕ^{Kpⁱ}* is thus the most probable deformation, given the input medical image and the prior distribution on deformations.

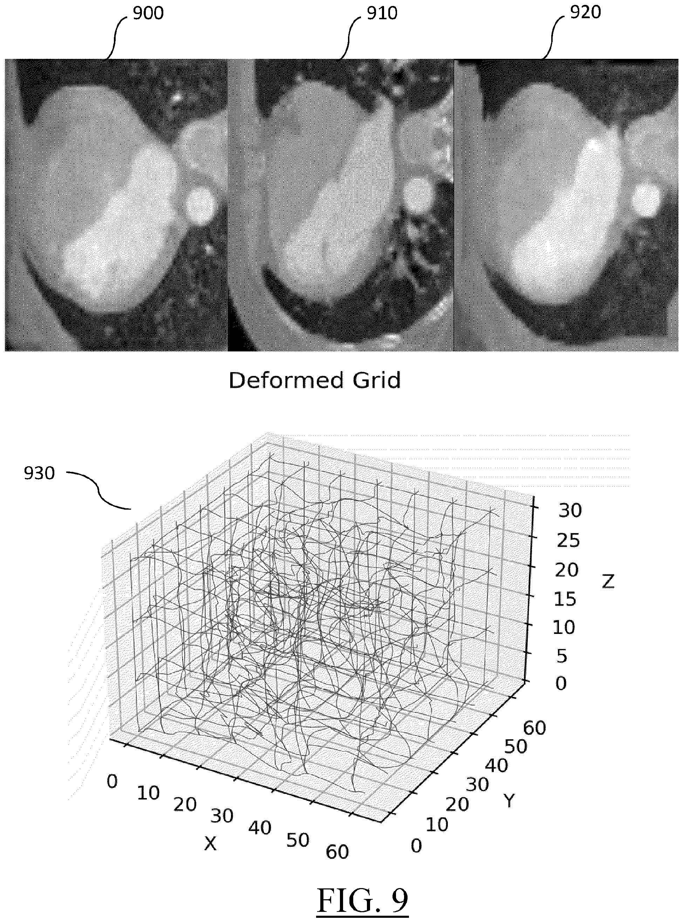

FIG. 9 illustrates an example of an instantiation (e.g., deformation) of the template image performed by the method of use. The medical image 900 represents the template image computed according to the generating method. The medical image 910 represents the input medical image (also referred to as target medical image). The medical image 920 represents the instantiated medical image, i.e., the medical image resulting from the application of the diffeomorphism (e.g., the diffeomorphic deformation) to the template image. The instantiated medical image 920 captures the characteristics (e.g., contours, structures, intensity) of the input medical image 910. The deformation grid 930 shows a three-dimensional grid illustrating the transformation from the template image 900 to the instantiated medical image 920.

The template image, e.g., before being used by the method of use, may comprise data representing a medical segmentation of the template image and/or one or more medical annotations on the template image. The method of use may further comprising projecting the data on the input medical image based on the determined parameters of the diffeomorphism. In other words, the method of use may determine parameters of a diffeomorphism which, when applied to the template image comprising data representing a medical segmentation of the template image and/or one or more medical annotations of the template image, results into the input medical image comprising the data (e.g., the deformed data).

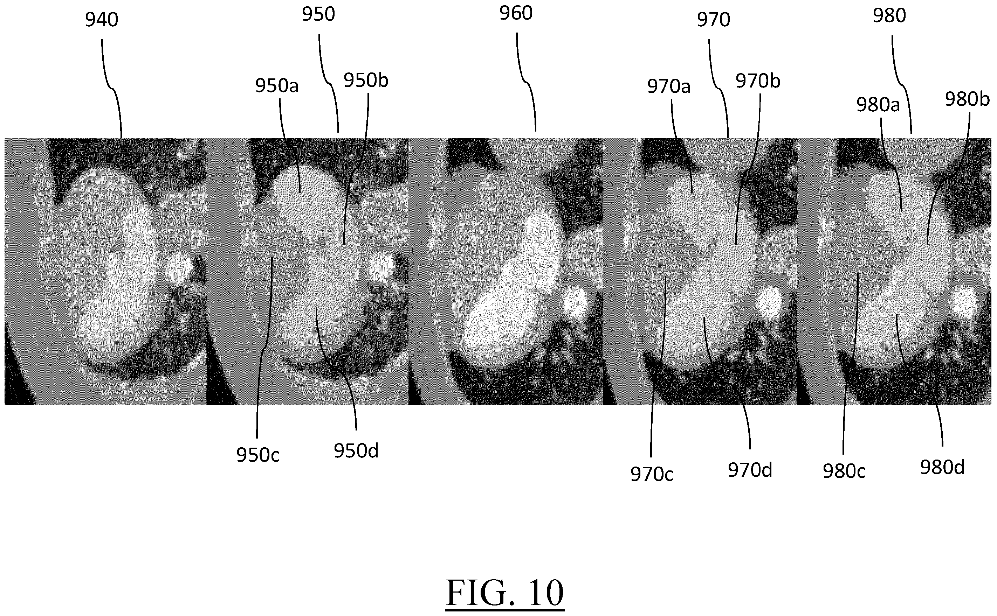

FIG. 10 illustrates how the method of use may transform data representing segmentations and/or annotations on the template image to the instantiated medical image. The image 940 represents the template image as computed by the generating method. The image 950 represents the template image 940 with data representing a medical segmentation of the template image 940 and/or one or more medical annotations on the template image 940. The image 950 comprises medical segmentations and/or annotations, namely, on the top of the image 950a, on the right of the image 950b, on the left of the image 950c, and on the bottom of the image 950d. The image 960 represents the input medical image. The image 970 represents the instantiated medical image, i.e., the medical image resulting from the application of the diffeomorphism (e.g., the diffeomorphic deformation) to the template image 950 with medical segmentation and/or annotations. The image 970 comprises data (e.g., deformed, transformed) representing medical segmentation and/or annotations of the template image 950, namely, the deformed segmentation 970a of the segmentation 950a, the deformed segmentation 970b of the segmentation 950b, the deformed segmentation 970c of the segmentation 950c, the deformed segmentation 970d of the segmentation 950d. The image 980 represents the input medical image with a ground truth segmentation and/or annotations 980a, 980b, 980c, 980d. The comparison between the instantiated medical image 970 and the input medical image 980 shows an accurate and valid instantiation (e.g., deformation) of the template image comprising data representing a medical segmentation of the template image and/or one or more medical annotations on the template image.

## Claims

1. A computer-implemented method for generating a template image of an organ, the method comprising:
- obtaining (S100):
• a dataset (D) comprising a set of medical images representing the organ for different patients, and
• an autoencoder (A) having been trained on a set of medical images representing the organ for different patients, the autoencoder including an encoder and a decoder, and
- determining (S120) the template image as a result of applying the decoder to a latent vector, the latent vector being defined in a latent space, by minimizing a loss which is a function of the latent vector and, for each medical image of the dataset, parameters of a diffeomorphic deformation applied to the template image to obtain the medical image, the latent vector and the parameters of the diffeomorphic deformation being variable during the minimization, the minimization being performed in the latent space, the loss including:
• a first term penalizing a discrepancy between:
o a posterior probability of the parameters of the diffeomorphic deformation applied to the template image to obtain each medical image of the dataset, given the respective medical image, and
o a Gaussian prior probability of the parameters of the diffeomorphic deformation applied to the template image to obtain each medical image of the dataset, and
• a second term penalizing a negative log-likelihood of the set of medical images of the dataset, given the latent vector and the parameters of the diffeomorphic deformation applied to the template image to obtain each medical image of the dataset.

2. The method of claim 1, wherein the determining of the template image includes training a neural network that predicts the parameters of the diffeomorphic deformation applied to the template image to obtain each medical image of the dataset.

3. The method of claim 2, wherein the neural network takes as input, for each medical image, the latent vector and a result of applying the encoder to the medical image.

4. The method of any one of claims 1 to 3, wherein the first term is a Kullback-Leibler divergence between the posterior probability and the Gaussian prior probability.

5. The method of any one of claims 1 to 4, wherein the diffeomorphic deformation is a result of an exponentiation of a smooth stationary velocity field, the smooth stationary velocity field being obtained by computing a smoothing kernel at control points of a medical image, each control point being attached with a respective parameter of the diffeomorphic deformation applied to the medical image, the exponentiation of the smooth stationary velocity field comprising a scaling-and-squaring algorithm.

6. The method of claim 5, wherein the smoothing kernel is a Gaussian kernel.

7. The method of any one of claims 1 to 6, wherein the Gaussian prior probability is centered.

8. The method of any one of claims 1 to 7, wherein the obtaining of the autoencoder comprises training the autoencoder.

9. The method of any one of claims 1 to 8, wherein the set of medical images comprises images from any one of the following medical-imaging modalities: Autorefraction, Angioscopy, Bone Densitometry (US), Biomagnetic Imaging, Bone Densitometry (X-Ray), Color Flow Doppler, Cinefluoroscopy, Colposcopy, Computed Radiography, Cystoscopy, Computed Tomography, Duplex Doppler, Digital Fluoroscopy, Diaphanography, Digital Microscopy, Digital Subtraction Angiography, Digital Radiography, Echocardiography, Electrocardiography, Cardiac Electrophysiology, Endoscopy, Fluorescein angiography, Fiducials, Fundoscopy, General Microscopy, Hard Copy, Hemodynamic Waveform, Intra-Oral Radiography, Intraocular Lens Data, Intravascular Optical Coherence Tomography, Intravascular Ultrasound, Keratometry, Lensometry, Laparoscopy, Laser Surface Scan, Magnetic Resonance Angiography, Mammography, Magnetic Resonance, MR T1 weighted, MR T2 weighted, MR Proton density weighted, MR Steady-state-free precession, MR Effective T2, MR Susceptibility-weighted, MR Short-tau inversion recovery, MR Fluid-attenuated inversion recovery, MR Double inversion recovery, MR Conventional diffusion weighted, MR Apparent diffusion coefficient, MR Diffusion tensor, MR Dynamic susceptibility contrast, MR Arterial spin contrast, MR Dynamic contrast enhanced, MR Blood-oxygen-level dependent imaging, MR Time-of-flight, MR Phase contrast, Magnetic Resonance Spectroscopy, Nuclear Medicine, Ophthalmic Axial Measurements, Optical Coherence Tomography (non-Ophthalmic), Ophthalmic Photography, Ophthalmic Mapping, Ophthalmic Refraction, Ophthalmic Tomography, Ophthalmic Visual Field, Optical Surface Scan, Other, Positron Emission Tomography (PET), Panoramic X-Ray, Respiratory Waveform, Radio Fluoroscopy, Radiographic Imaging (conventional film/screen), Radiotherapy Dose, Radiotherapy Image, Radiotherapy Plan, Radiotherapy Treatment Record, Radiotherapy Structure Set, Segmentation, Slide Microscopy, Stereometric Relationship, Single-Photon Emission Computed Tomography (SPECT), Automated Slide Stainer, Thermography, Ultrasound, A-mode US, B-mode US, M-mode US, Visual Acuity, Videofluorography, X-Ray Angiography, and External-Camera Photography.

10. A computer-implemented method of use of a template image of an organ generated according to the method of any one of claims 1 to 9, the method of use comprising:
- obtaining (S200) an input medical image representing the organ for a patient; and
- determining (S210) parameters of a diffeomorphism which, when applied to the template image, results into the input medical image.

11. The method of claim 10, wherein the diffeomorphism is of the same class as the diffeomorphic deformation of any one of claims 1 to 9, optionally with parameters predicted by the neural network of any one of claims 2 or 3.

12. The method of claim 10 or 11, wherein the template image comprises data representing a medical segmentation of the template image and/or one or more medical annotations on the template image, the method further comprising projecting the data on the input medical image based on the determined parameters of the diffeomorphism.

13. A data structure including:
- a computer program comprising instructions which, when the program is executed by a computer, cause the computer to perform the method of any one of claims 1 to 9 and/or the method of use of any one of claims 10 or 12; and/or
- a template image generated according to the method of any one of claims 1 to 9.

14. A computer readable storage medium having recorded thereon the data structure of claim 13.

15. A system comprising a processor coupled to a memory, the memory having recorded thereon the data structure of claim 13.
